# EUROPÄISCHE PATENTSCHRIFT

(11) **EP 3 670 960 B1**
(45) Veröffentlichungstag und Bekanntmachung des Hinweises auf die Patenterteilung: **18.05.2022**
(21) Anmeldenummer: 19204237.2
(22) Anmeldetag: 21.10.2019
(51) Int. Cl.: F16G 1/18, F16G 1/10, F16G 5/08, F16G 5/20

(54) **RIEMEN**
BELT
COURROIE

(30) Priorität: 17.12.2018 DE 102018221886
(43) Veröffentlichungstag der Anmeldung: 24.06.2020
(73) Patentinhaber: ContiTech Antriebssysteme GmbH, 30165 Hannover (DE)
(72) Erfinder: Göser, Hubert, 30419 Hannover (DE); Quass, Jan-Henning, 30419 Hannover (DE); Kucharczyk, Andre, 30419 Hannover (DE); Marwede, Rolf, 30419 Hannover (DE); Brocke, Stephan, 30419 Hannover (DE)
(74) Vertreter: Continental Corporation

(56) Entgegenhaltungen:
- DE-A1-102010 015 901
- DE-T2- 60 115 166

## Beschreibung

Die vorliegende Erfindung betrifft einen Riemen gemäß dem Oberbegriff des Patentanspruchs 1.

In der Antriebstechnik werden auf verschiedenen technischen Gebieten Riemen zur Kraftübertragung verwendet. Bei der Kraftübertragung z.B. in einem Verbrennungsmotor kann ein Riemen als flexibles, endlos geschlossenes Band ausgebildet sein. Riemen können jedoch auch mit zwei offenen Enden beispielsweise bei Aufzugssystemen eingesetzt werden, um eine Aufzugskabine in der Höhe zu bewegen.

Derartige Riemen werden heutzutage üblicherweise im Wesentlichen aus einem flexiblen Material wie z.B. aus einem elastomeren Material wie z.B. aus Gummi oder z.B. aus einem Kunststoff wie z.B. aus Polyurethan (kurz: PU) als Riemenkörper hergestellt, in welches in der Richtung der Kraftübertragung, d.h. in der Bewegungsrichtung, Zugträger wie z.B. Stahlseile oder textile Zugträger eingebettet sind. Der Riemen weist wenigstens eine profilierte Seite auf, welche bei der Anwendung mit wenigstens einer Antriebsrolle und mit wenigstens einer Umlenkrolle in Kontakt steht. Hierdurch kann der Riemen angetrieben und gleichzeitig geführt werden. Die Profilierung kann je nach Anwendungsfall quer zur Bewegungsrichtung z.B. als Zähne oder in der Bewegungsrichtung z.B. als Keile bzw. als Keilrippen ausgebildet sein.

Um das Material des Riemenkörpers vor Abrieb und dergleichen zu schützen, ist es bekannt, wenigstens die profilierte Seite des Riemens mit einer Beschichtung zu versehen. Hierdurch kann z.B. ein Gewebe verwendet werden, welches mit einer seiner Seiten flächig auf der korrespondierenden Seite des Riemenkörpers aufgebracht wird. Auf der gegenüberliegenden nach außen zeigenden Seite kann das Gewebe zusätzlich mit einer Folie abgedeckt werden. Hierdurch kann die Außenseite der Profilierung nach außen hin die Folie aufweisen.

Das Gewebe kann in der Bewegungsrichtung gute Dehneigenschaften aufweisen, so dass die Elastizität des Riemenkörpers nicht oder zumindest nur unwesentlich eingeschränkt wird, das Gewebe jedoch einem Abrieb dieser Seite des Riemenkörpers entgegenwirken kann. Hierdurch können eine Reduzierung des Verschleißes sowie eine Minderung von Geräuschen erreicht werden. Die außenliegende Folie kann das Gewebe z.B. vor dem Eindringen von Feuchtigkeit schützen.

Die Herstellung eines derartigen Riemens erfolgt üblicherweise derart, dass die Beschichtung als Laminat separat hergestellt und anschließend mit dem Riemenkörper verbunden wird. Das Gewebe wird somit mit der Folie zu einem Laminat doubliert. Anschließend wird das Laminat so vorgeformt, dass das Laminat die Kontur der Profilierung des Riemens annimmt. Die Folie wird dabei plastifiziert, verformt und durch Abkühlen wieder verfestigt. Hierdurch nimmt auch das Gewebe die vorgegebene Form der Profilierung an. Anschließend wird das vorgeformte Laminat in der Herstellung des Riemens so eingesetzt, dass die Folie die Außenseite der Profilierung des Riemens bildet.

Nachteilig hierbei ist, dass durch Abnutzung bzw. durch mechanische Beschädigungen der Folie Feuchtigkeit durch die Schadstellen der Folie hindurch in die Beschichtung sowie in den Riemenkörper eindringen kann. Werden Stahlseile als Zugträger verwendet, so kann die Feuchtigkeit dort zu Korrosion führen. Bei textilen Zugträgern kann die Feuchtigkeit die Haftung zum Material des Riemenkörpers negativ beeinflussen.

Die WO 2017 178 123 A1 beschreibt einen Zahnriemen, vorzugsweise einen Polyurethan-Zahnriemen (PU-Zahnriemen), der mindestens eine mit einem Zahnprofil versehene Antriebsseite aufweist und dessen Zahnprofil mit einer außenseitigen Gewebelage versehen ist. Die Gewebelage weist auf ihrer dem Zahnprofil abgewandten Außenseite eine Beschichtung aus Kunststoff auf, vorzugsweise aus Polyethylen (PE), wobei die Gewebelage in Bezug auf ihre Dicke einerseits auf ihrer dem Zahnprofil zugewandten Seite mindestens teilweise von Grundmaterial des Zahnriemens und auf ihrer Außenseite mindestens teilweise und so von der Kunststoffbeschichtung durchdrungen ist, dass die Gewebelage in einem in Bezug auf ihre Dicke innenliegenden Dickenbereich frei von Durchdringungsmaterial ist. Durch die außenseitige Kunststoffbeschichtung kann eine unzulässig starke Durchdringung des Gewebes durch das Material des Zahnriemenkörpers wie z.B. durch das Polyurethan vermieden werden, was zu einer Verschiebung oder zu einer Verzerrung der Gewebestruktur führen könnte. Dies kann die Dehnfähigkeit des Gewebes und damit die Zahntragfähigkeit negativ beeinflussen.

Nachteilig ist bei derartigen Riemen wie z.B. bei dem Zahnriemen der WO 2017 178 123 A1, dass Feuchtigkeit seitlich hinter die außenliegende Folie gelangen und in die Gewebelage eindringen kann. Hierdurch kann sich die Feuchtigkeit in der Querrichtung des Riemens in der Gewebelage fortsetzen und bis zu den Bereichen gelangen, wo die Stahlseile oder textilen Zugträger verlaufen, welche dann von der Feuchtigkeit angegriffen werden und z.B. korrodieren können.

Eigentlich kann keine Feuchtigkeit von der Gewebelage zu den Stahlseilen oder textilen Zugträgern als Zugträger gelangen, da die Stahlseile oder textilen Zugträger von dem flexiblen Material des Riemens vollständig ummantelt und somit von der Feuchtigkeit abgegrenzt und geschützt werden. Dies kann dadurch erreicht werden, dass die Zugträger zunächst von dem flexiblen Material ummantelt und anschließend in das vorgeformte Laminat eingelegt werden.

Bei der Herstellung werden der ummantelten Zugträger jedoch unmittelbar nach dem Ummanteln mit dem flexiblen Material über Rollen gelenkt. Ist das ummantelnde flexible Material zu diesem Zeitpunkt noch nicht ausreichend verfestigt, so kann das flexible Material durch den Kontakt mit der Rolle seitlich weggedrückt werden. Hierdurch kann die Ummantelung an diesen Stellen nicht nur radial dünner ausfallen, sondern das flexible Material kann sogar soweit weggedrückt werden, dass die Ummantelung unterbrochen wird und der Zugträger an dieser Fehlstelle nach außen hin in Erscheinung treten kann.

Wird ein derartige Fehlstellen aufweisender Zugträger nun in das vorgeformte Laminat eingelegt, so können die Fehlstellen zum Laminat hin ausgerichtet sein. An den Fehlstellen steht somit der Zugträger in direktem Kontakt mit der Gewebelage. In die Gewebelage eindringende Feuchtigkeit kann in diesem Fall über die Fehlstellen der Ummantelung zu den Zugträgern gelangen und diese bei Stahlseilen als Zugträgern durch Korrosion beschädigen und schwächen. Bei textilen Zugträgern können diese wenigstens an den Fehlstellen aufquellen. In jedem Fall kann die Traglast der Zugträger und damit des Riemens reduziert werden. Dies kann ebenso für die Lebensdauer des Riemens gelten. Insbesondere bei der Verwendung von Riemen bei Anwendungsfällen wie z.B. bei Windenergieanlagen im Offshore-Bereich, welche salzhaltiger Meeresluft ausgesetzt sind, kann das Eindringen von salzhaltiger Feuchtigkeit in den Riemen bis hin zu dessen Zugträgern zu den o.g. Nachteilen führen.

Die DE 10 2010 015 901 A1 beschreibt einen Antriebsriemen, insbesondere einen Keilrippenriemen, mit einem elastischen Grundkörper auf der Basis eines Vulkanisats, umfassend eine Decklage als Riemenrücken und einen Unterbau mit einer Kraftübertragungszone, wobei die Kraftübertragungszone mit einer Gewebeauflage versehen ist, die aus Kettfäden und Schussfäden gebildet ist. Der Antriebsriemen zeichnet sich dadurch aus, dass - die Kettfäden in Riemenlängsrichtung und die Schussfäden in Riemenquerrichtung verlaufen; - die Kettfäden und Schussfäden dehnbar sind, wobei die Dehnbarkeit der Schussfäden größer ist als die der Kettfäden und dass - die Kettfäden und Schussfäden texturiert sind. Hinsichtlich der Gewebeauflage werden vorteilhafte textiltechnologische Parameter vorgestellt. Auch werden bevorzugte Anwendungsbereiche des Antriebsriemens, insbesondere des Keilrippenriemens, angesprochen.

Die DE 60115166 T2 beschreibt einen Endlos-Kraftübertragungsriemen, umfassend (a) einen Spannabschnitt; (b) einen Pufferabschnitt; (c) einen zwischen besagtem Spannabschnitt und Pufferabschnitt angeordneten Lastaufnahmeabschnitt; (d) zumindest eine Antriebsfläche mit einer Gewebeschicht, die mit einer Außenfläche des Riemens verbunden ist. Der Riemen umfasst weiterhin folgendes: (e) eine Schicht aus Polyvinylidenfluorid, die sich zwischen der Gewebeschicht und dem Pufferabschnitt des Kraftübertragungsriemens befindet. Ferner umfasst der Pufferabschnitt eine peroxidausgehärtete Kautschukzusammensetzung, die ein Elastomer umfasst, das aus der aus Naturkautschuk, Polychloropren, Acrylnitril-Butadien-Copolymeren, Polyisopren, Zinksalzen ungesättigter carboxylsäureester-gepfropfter hydrierter Nitril-Butadien-Elastomere, Styrol-Butadien-Kautschuken, Polybutadien, EPDM, hydrierten Acrylnitril-Butadien-Copolymeren und Ethylen-Acrylelastomeren bestehenden Gruppe gewählt ist.

Eine Aufgabe der vorliegenden Erfindung ist es, einen Riemen der eingangs beschriebenen Art bereit zu stellen, so dass die zuvor beschriebenen Nachteile vermieden oder zumindest reduziert werden können. Insbesondere soll ein Riemen geschaffen werden, bei dem das Vordringen von Feuchtigkeit über die Gewebelage hin zu den Zugträgern vermieden oder zumindest reduziert werden kann. Zumindest soll eine Alternative zu bekannten derartigen Riemen geschaffen werden.

Die Aufgabe wird erfindungsgemäß durch einen Riemen mit den Merkmalen gemäß Patentanspruch 1 gelöst. Vorteilhafte Weiterbildungen sind in den Unteransprüchen beschrieben.

Somit betrifft die vorliegende Erfindung einen Riemen mit einem Riemenkörper, welcher sich im Wesentlichen in einer Längsrichtung erstreckt und im Wesentlichen ein flexibles Material aufweist, wobei in dem Riemenkörper in der Längsrichtung wenigstens ein Zugträger, vorzugsweise eine Mehrzahl von Zugträgern, zumindest im Wesentlichen eingebettet und zumindest im Wesentlichen von dem flexiblen Material des Riemenkörpers umschlossen ist, und mit einer Beschichtung, welche unmittelbar von einer Antriebsseite des Riemens an dem Riemenkörper angeordnet ist, wobei die Beschichtung eine Gewebeschicht aufweist.

Derartige Riemen wurden eingangs beschrieben. Hier kann das Problem auftreten, dass der Zugträger fertigungsbedingt nicht wie gewünscht vollständig in das flexible Material des Riemenkörpers eingebettet und vollständig von dem flexiblen Material des Riemenkörpers umschlossen wird, sondern sich Fehlstellen der Ummantelung ausbilden, an denen der Zugträger die Ummantelung durchdringt und somit nach außen in Erscheinung tritt. Dies kann an den Fehlstellen zu einem direkten Kontakt mit der Beschichtung führen, welche bisher als unmittelbar an dem ummantelten Zugträger anliegende Schicht die Gewebeschicht aufweist. In die Gewebelage eindringende Feuchtigkeit kann somit über die Fehlstellen der Ummantelung zu dem Zugträger gelangen und diesen beschädigen und schwächen. Die Gewebelage kann auch als Gewebeschicht bezeichnet werden.

Die vorliegende Erfindung ist dadurch gekennzeichnet, dass die Beschichtung dem Riemenkörper zugewandt eine erste Folie aufweist, welche zwischen dem Riemenkörper und der Gewebeschicht angeordnet und ausgebildet ist, den Riemenkörper gegenüber der Gewebeschicht abzutrennen. Unter einer Folie wird insbesondere eine sehr dünne Schicht eines Materials verstanden.

Auf diese Art und Weise kann ein Material, welches den Zugträger und die Gewebeschicht voneinander trennen kann, auf der Seite der Beschichtung vorgesehen werden, so dass eine flächige und vollständige Abdeckung der Gewebeschicht durch die erste Folie erreicht werden kann. Insbesondere kann die erste Folie mit der Gewebeschicht wie eingangs beschrieben als Laminat ausgebildet werden, was die Herstellung einer derartigen Beschichtung vereinfachen und bzw. oder die flächige und vollständige Abdeckung der Gewebeschicht durch die erste Folie sicherstellen kann. Hierdurch kann die erste Folie auch an den o.g. Fehlstellen der Ummantelung des Zugträgers vorhanden sein und die Fehlstellen gegenüber der Gewebeschicht abtrennen, so dass Feuchtigkeit zwar in die Gewebeschicht eindringen und sich dort verbreiten aber nicht mehr über die Fehlstellen zum Zugträger gelangen kann. Dies kann die eingangs beschriebenen Beschädigungen reduzieren bzw. diese vollständig vermeiden. Mit anderen Worten kann mittels der ersten Folie der Riemenkörper gegenüber der Gewebeschicht isoliert, geschützt, abgeschottet etc. werden. Dies kann insbesondere hinsichtlich eines Übergangs von Feuchtigkeit von der Gewebeschicht zu dem Stahlseil hin erfolgen.

Hierzu eine erste Folie als sehr dünne Schicht zu verwenden kann den Vorteil aufweisen, den zuvor genannten Zweck erreichen zu können und gleichzeitig eine Erhöhung der Dicke, der Kosten und bzw. oder des Gewichts der Beschichtung möglichst gering halten zu können.

Gemäß der vorliegenden Erfindung weist das flexible Material des Riemenkörpers Polyurethan auf, vorzugsweise besteht aus Polyurethan, und das Material der ersten Folie weist Polyurethan auf, vorzugsweise besteht aus Polyurethan. Hierdurch die mechanisch vorteilhaften Eigenschaften des Polyurethans für einen erfindungsgemäßen Riemen verwendet werden.

Gemäß der vorliegenden Erfindung weisen das flexible Material des Riemenkörpers und das Material der ersten Folie dasselbe Polyurethan auf, vorzugsweise bestehen aus demselben Polyurethan. Hierdurch kann die Verwendung von unterschiedlichen Materialien an dieser Stelle des Riemens vermieden werden, was zu unterschiedlichen Materialeigenschaften führen könnte. Auch kann die Verwendung unterschiedlicher Materialien die Herstellungskosten erhöhen. Insbesondere ist es ein Aspekt der vorliegenden Erfindung, das lediglich die Anwesenheit des Materials, welches den Zugträger umgeben soll, gegenüber der Gewebeschicht sichergestellt werden soll. Dies kann gerade durch die Verwendung desselben Materials als flexibles Material des Riemenkörpers und als das Material der ersten Folie erreicht werden.

Gemäß einem weiteren Aspekt der vorliegenden Erfindung weist das Material der Gewebeschicht Polyamid auf, vorzugsweise besteht aus Polyamid. Hierdurch die mechanisch vorteilhaften Eigenschaften des Polyamids für einen erfindungsgemäßen Riemen verwendet werden. Insbesondere kann die vergleichsweise hohe Abriebfestigkeit sowie der vergleichsweise geringe Reibbeiwert des Polyamids für einen Riemen von Vorteil sein, wenn die Polyamid-Gewebeschicht direkt als äußerste Schicht verwendet wird oder durch Freilegen einer darüberliegenden Schicht wie z.B. einer Folie im Laufe des Betriebs zumindest abschnittsweise zur äußersten Schicht wird.

Gemäß einem weiteren Aspekt der vorliegenden Erfindung ist die erste Folie unmittelbar benachbart zu der Gewebeschicht angeordnet. Hierdurch kann z.B. die feuchtigkeitsabschirmende Wirkung der ersten Folie möglichst unmittelbar an der Gewebeschicht, welche Feuchtigkeit leiten kann, erzielt werden. Hierdurch können jegliche Schichten und Körper, welche relativ zur ersten Folie der Gewebeschicht abgewandt angeordnet sind, z.B. vor Feuchtigkeit geschützt werden. Ferner kann die Anzahl der Schichten geringgehalten werden. Dies kann Kosten hinsichtlich Materialeinsatz und Herstellungsschritte sowie Gewicht und Bauraum sparen bzw. reduzieren.

Gemäß einem weiteren Aspekt der vorliegenden Erfindung weist die Beschichtung ferner eine zweite Folie auf, welche gegenüber der Gewebeschicht der ersten Folie abgewandt angeordnet und ausgebildet ist, die Gewebeschicht nach außen hin abzudecken. Hierdurch kann ein Schutz der Gewebeschicht in dieser Richtung gegenüber äußeren Einflüssen wie z.B. Feuchtigkeit, Verschmutzung und dergleichen erfolgen. Stellt die zweite Folie die Außenseite des Riemens auf dieser Seite dar, so kann die Reibung gegenüber anderen Körpern durch die zweite Folie anstelle der Gewebeschicht bestimmt werden. Auch kann die Gewebeschicht mechanisch durch die zweite Folie geschützt werden, um z.B. den Abrieb zu verringern.

Gemäß einem weiteren Aspekt der vorliegenden Erfindung weist die zweite Folie Polyurethan auf, vorzugsweise besteht aus Polyurethan. Hierdurch die mechanisch vorteilhaften Eigenschaften des Polyurethans für einen erfindungsgemäßen Riemen verwendet werden. Der vergleichsweise hohe Reibbeiwert des Polyurethans kann dabei in Kauf genommen werden, kann sich die zweite Folie als äußerste Schicht ggfs. zumindest abschnittsweise im Betrieb abreiben und sich somit der Reibbeiwert verringern.

Gemäß einem weiteren Aspekt der vorliegenden Erfindung weist die zweite Folie Polyethylen auf, vorzugsweise besteht aus Polyethylen. Hierdurch die mechanisch vorteilhaften Eigenschaften des Polyethylens für einen erfindungsgemäßen Riemen verwendet werden.

Gemäß einem weiteren Aspekt der vorliegenden Erfindung ist die zweite Folie unmittelbar benachbart zu der Gewebeschicht angeordnet ist. Dies kann die Anzahl der Schichten geringhalten. Hierdurch können die Kosten hinsichtlich Materialeinsatz und Herstellungsschritte sowie Gewicht und Bauraum gespart bzw. reduziert werden.

Gemäß einem weiteren Aspekt der vorliegenden Erfindung weist die Antriebsseite des Riemens eine Profilierung, vorzugsweise in der Querrichtung ausgerichtete Keile, auf. Hierdurch kann ein mechanischer Kontakt zu anderen Körper über die Antriebsseite des Riemens verbessert werden, um höhere Kräfte in der Längsrichtung des Riemens übertragen zu können. Dies kann insbesondere durch in der Querrichtung ausgerichtete Keile, d.h. bei der Ausbildung des erfindungsgemäßen Riemens als Zahnriemen, besonders wirkungsvoll erfolgen.

Zwei Ausführungsbeispiele und weitere Vorteile der Erfindung werden nachstehend im Zusammenhang mit den folgenden Figuren erläutert. Darin zeigt:
- Fig. 1: einen schematischen Längsschnitt durch einen Riemen;
- Fig. 2: eine Detaildarstellung der Fig. 1;
- Fig. 3: einen bekannten zweischichtigen Aufbau eines bekannten Riemens;
- Fig. 4: einen erfindungsgemäßen zweischichtigen Aufbau eines erfindungsgemäßen Riemens gemäß einem ersten Ausführungsbeispiel; und
- Fig. 5: einen erfindungsgemäßen dreischichtigen Aufbau eines erfindungsgemäßen Riemens gemäß einem zweiten Ausführungsbeispiel.

Die Beschreibung der o.g. Figuren erfolgt in kartesischen Koordinaten mit einer Längsrichtung X, einer zur Längsrichtung X senkrecht ausgerichteten Querrichtung nicht dargestellt sowie einer sowohl zur Längsrichtung X als auch zur Querrichtung senkrecht ausgerichteten vertikalen Richtung Z. Die Längsrichtung X kann auch als Tiefe X, die Querrichtung auch als Breite und die vertikale Richtung Z auch als Höhe Z bezeichnet werden.

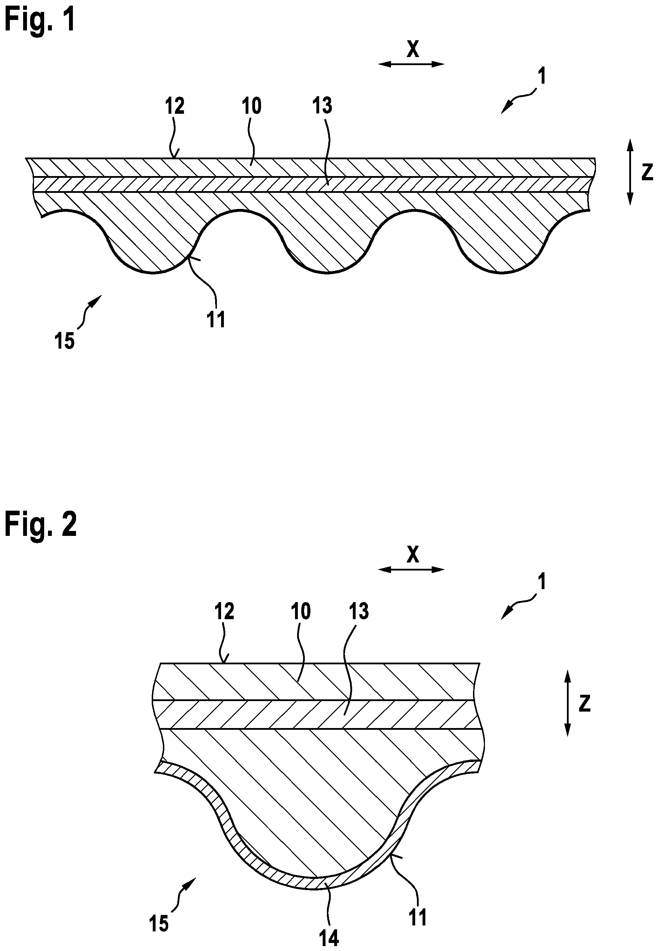

Fig. 1 zeigt einen schematischen Längsschnitt durch einen Riemen 1. Fig. 2 zeigt eine Detaildarstellung der Fig. 1.

Der Riemen 1 stellt einen allgemein bekannten Riemen 1 dar, welcher als Zahnriemen 1 ausgebildet ist. Der Zahnriemen 1 weist einen Riemenkörper 10 auf, welcher aus Polyurethan (PU) besteht. Der Zahnriemen1 weist eine erste Riemenseite 11 auf, welche als Antriebsseite 11 ausgebildet ist, mit Antriebsrollen, Führungsrollen und Umlenkrollen (nicht dargestellt) eines Antriebssystems zusammenzuwirken und Kräfte zu übertragen. Hierzu weist die Antriebsseite 11 eine Profilierung 15 in Form von Zähnen 15 auf. Der Antriebsseite 11 in der Höhe Z gegenüberliegend weist der Zahnriemenl eine zweite Riemenseite 12 auf. Innerhalb des Riemenkörpers 10 sind mehrere Zugträger 13 in Form von Stahlseilen 13 in der Längsrichtung X verlaufend angeordnet, welches aus einzelnen Stahllitzen gebildet wird. Die Stahlseile 13 dienen der Übertragung der Zugkräfte in der Längsrichtung X als Bewegungsrichtung des Zahnriemens 1.

Die äußere Oberfläche der Antriebsseite 11 des Zahnriemens1 wird von einer Beschichtung 14 gebildet, welche separate als Laminat hergestellt wurde. Auf die laminierte Beschichtung 14 wird der Riemenkörper 10 samt dort eingebetteter Stahlseile 13 aufgebracht und ausgehärtet, so dass sich eine stoffschlüssige Verbindung zwischen der laminierten Beschichtung 14 und dem Riemenkörper 10 ergibt und zu einem einstückigen Zahnriemen1 führt, siehe z.B. Fig. 2.

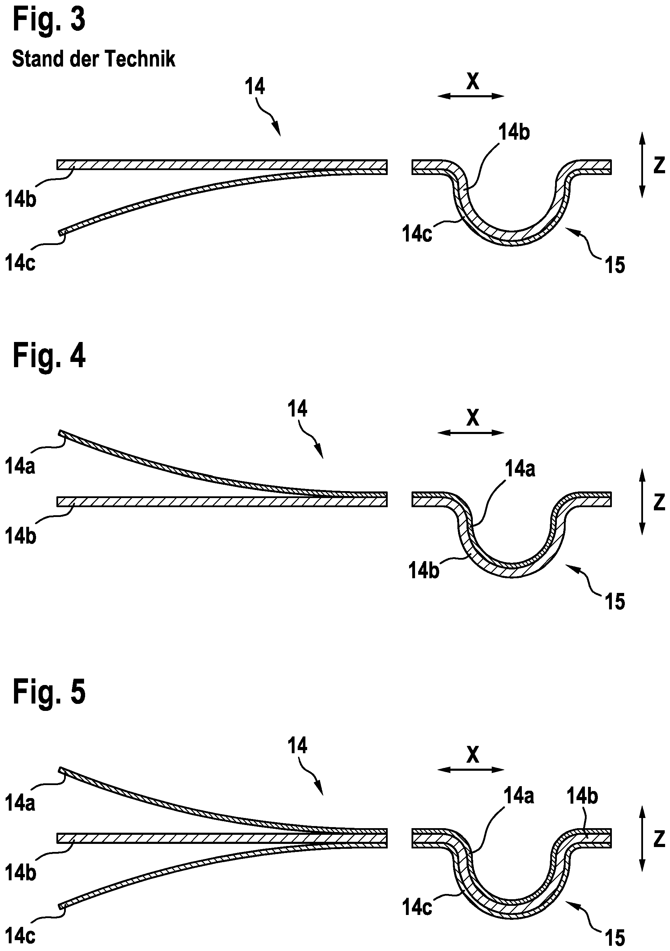

Fig. 3 zeigt einen bekannten zweischichtigen Aufbau eines bekannten Riemens 1 wie des zuvor beschriebenen Zahnriemens1. Es werden eine Gewebeschicht 14b und eine Folie 14c als Außenfolie 14c verwendet, welche separat hergestellt und durch übereinanderlegen zu einem zweischichtigen Aufbau zusammengeführt werden. Der zweischichtige Aufbau wird dann in die gewünschte Form, welche der Anordnung der Profilierung 15 entspricht, gebracht.

Derartige Beschichtungen 14 für Zahnriemenl sind bekannt. In diesem Fall liegt die Gewebeschicht 14b unmittelbar an dem Riemenkörper 10 an, so dass es zu einem direkten Kontakt zwischen Stahlseilen 13 und Gewebeschicht 14b kommen kann, falls an Fehlstellen das Material des Riemenkörpers 10 von einem Stahlseil 13 unbeabsichtigterweise durchdrungen wird. Durch diesen direkten Kontakt zwischen Gewebeschicht 14b und Stahlseile 13 kann Feuchtigkeit, welche seitlich in der Querrichtung in die Gewebeschicht 14b eindringen und sich innerhalb der Gewebeschicht 14b in der Querrichtung weiter nach innen ausbreiten kann, auch die Fehlstellen erreichen und hier die Stahlseile 13 z.B. durch Korrosion angreifen und schädigen.

Fig. 4 zeigt einen erfindungsgemäßen zweischichtigen Aufbau eines erfindungsgemäßen Riemens 1 wie des zuvor beschriebenen Zahnriemens1 gemäß einem ersten Ausführungsbeispiel. Um den zuvor beschriebenen Kontakt zwischen Stahlseilen 13 und Beschichtung 14 an den Fehlstellen zu vermeiden weist die Beschichtung 14 in diesem Ausführungsbeispiel neben der zuvor beschriebenen Gewebeschicht 14b eine ersten Folie 14a als Innenfolie 14a auf, welche zwischen der Gewebeschicht 14b und dem Riemenkörper 10 bzw. den Stahlseilen 13 angeordnet ist. Die Innenfolie 14a liegt somit auch an den Fehlstellen zwischen den Stahlseilen 13 und der Gewebeschicht 14a, so dass auch beim Auftreten von unerwünschten Fehlstellen ein direkter Kontakt zwischen den Stahlseilen 13 und der Gewebeschicht 14b vermieden werden kann. Hierdurch kann ein Übergang von Feuchtigkeit von der Gewebeschicht 14b auf die Stahlseile 13 vermieden und somit diese Ursache für die Entstehung von Korrosion der Stahlseile 13 ausgeschlossen werden.

Der Riemenkörper 10 und die Innenfolie 14a weisen dabei dasselbe Material wie z.B. Polyurethan (PU) auf, so dass die zuvor beschriebene Wirkung erreicht werden kann, ohne die Materialeigenschaften im Bereich zwischen der Gewebeschicht 14b und dem Riemenkörper 10 zu verändern. Die Gewebeschicht 14b kann vorzugsweise aus Polyamid (PA) ausgebildet sein.

Fig. 5 zeigt einen erfindungsgemäßen dreischichtigen Aufbau eines erfindungsgemäßen Riemens 1 wie des zuvor beschriebenen Zahnriemens1 gemäß einem zweiten Ausführungsbeispiel. Der Zahnriemenl gemäß dem zweiten Ausführungsbeispiel entspricht dem Zahnriemen1 gemäß dem ersten Ausführungsbeispiel mit dem Unterschied, dass die Beschichtung 14 dem Riemenkörper 10 nach außen hin eine zweite Folie 14c als Außenfolie 14c aufweist. Hierdurch kann ein Schutz der Gewebeschicht 14b nach außen zur Antriebsseite 11 hin erfolgen. Die Außenfolie 14c kann aus Polyurethan (PU) oder aus Polyethylen (PE) bestehen.

### Bezugszeichenliste (Teil der Beschreibung)

- X: Längsrichtung
- Y: Querrichtung; Breite
- Z: vertikale Richtung; Höhe

- 1: Riemen; Zahnriemen
- 10: (PU-)Riemenkörper
- 11: erste Riemenseite; Antriebsseite
- 12: zweite Riemenseite
- 13: Zugträger; Stahlseile
- 14: Beschichtung
- 14a: erste (PU-)Folie; (PU-)Innenfolie
- 14b: (PA-)Gewebeschicht
- 14c: zweite (PE-/PU-)Folie; (PE-/PU-)Außenfolie
- 15: Profilierung bzw. Zähne der ersten Riemenseite 11

## Patentansprüche

1. Riemen (1)
mit einem Riemenkörper (10), welcher sich im Wesentlichen in einer Längsrichtung erstreckt und im Wesentlichen ein flexibles Material aufweist,
wobei in dem Riemenkörper (10) in der Längsrichtung wenigstens ein Zugträger (13), vorzugsweise eine Mehrzahl von Zugträgern (13), zumindest im Wesentlichen eingebettet und zumindest im Wesentlichen von dem flexiblen Material des Riemenkörpers (10) umschlossen ist, und
mit einer Beschichtung (14), welche unmittelbar von einer Antriebsseite (11) des Riemens (1) an dem Riemenkörper (10) angeordnet ist,
wobei die Beschichtung (14) eine Gewebeschicht (14b) aufweist und
wobei die Beschichtung (14) dem Riemenkörper (10) zugewandt eine erste Folie (14a) aufweist, welche zwischen dem Riemenkörper (10) und der Gewebeschicht (14b) angeordnet und ausgebildet ist, den Riemenkörper gegenüber der Gewebeschicht (14b) abzutrennen,
**dadurch gekennzeichnet, dass**
das flexible Material des Riemenkörpers (10) Polyurethan aufweist, vorzugsweise aus Polyurethan besteht,
das Material der ersten Folie (14a) Polyurethan aufweist, vorzugsweise aus Polyurethan besteht, und
das flexible Material des Riemenkörpers (10) und das Material der ersten Folie (14a) dasselbe Polyurethan aufweisen, vorzugsweise aus demselben Polyurethan bestehen.

2. Riemen (1) nach Anspruch 1, **dadurch gekennzeichnet, dass**
das Material der Gewebeschicht (14b) Polyamid aufweist, vorzugsweise aus Polyamid besteht.

3. Riemen (1) nach Anspruch 1 oder 2, **dadurch gekennzeichnet, dass**
die erste Folie (14a) unmittelbar benachbart zu der Gewebeschicht (14b) angeordnet ist.

4. Riemen (1) nach einem der vorangehenden Ansprüche, **dadurch gekennzeichnet, dass**
die Beschichtung (14) ferner eine zweite Folie (14c) aufweist, welche gegenüber der Gewebeschicht (14b) der ersten Folie (14a) abgewandt angeordnet und ausgebildet ist, die Gewebeschicht (14b) nach außen hin abzudecken.

5. Riemen (1) nach Anspruch 4, **dadurch gekennzeichnet, dass**
wobei die zweite Folie (14c) Polyurethan aufweist, vorzugsweise aus Polyurethan besteht.

6. Riemen (1) nach Anspruch 4, **dadurch gekennzeichnet, dass**
wobei die zweite Folie (14c) Polyethylen aufweist, vorzugsweise aus Polyethylen besteht.

7. Riemen (1) nach einem der Ansprüche 4 bis 6, **dadurch gekennzeichnet, dass** die zweite Folie (14c) unmittelbar benachbart zu der Gewebeschicht (14b) angeordnet ist.

8. Riemen (1) nach einem der vorangehenden Ansprüche, **dadurch gekennzeichnet, dass**
die Antriebsseite (11) des Riemens (1) eine Profilierung (15), vorzugsweise in der Querrichtung ausgerichtete Zähne (15), aufweist.

## Claims

1. Belt (1),
with a belt body (10) which extends substantially in a longitudinal direction and substantially comprises a flexible material,
wherein at least one tensioning member (13), preferably a plurality of tensioning members (13), is at least substantially embedded in the belt body (10) in the longitudinal direction and at least substantially surrounded by the flexible material of the belt body (10), and
with a coating (14) which is arranged directly on the belt body (10) from a drive side (11) of the belt (1),
wherein the coating (14) comprises a fabric layer (14b), and
wherein, facing the belt body (10), the coating (14) has a first film (14a) which is arranged between the belt body (10) and the fabric layer (14b) and is designed to isolate the belt body from the fabric layer (14b),
**characterized in that**
the flexible material of the belt body (10) comprises polyurethane, preferably consists of polyurethane, and
the material of the first film (14a) comprises polyurethane, preferably consists of polyurethane, and
the flexible material of the belt body (10) and the material of the first film (14a) comprise the same polyurethane, preferably consist of the same polyurethane.

2. Belt (1) according to Claim 1, **characterized in that**
the material of the fabric layer (14b) comprises polyamide, preferably consists of polyamide.

3. Belt (1) according to Claim 1 or 2, **characterized in that**
the first film (14a) is arranged directly adjacent to the fabric layer (14b).

4. Belt (1) according to any of the preceding claims, **characterized in that**
the coating (14) further comprises a second film (14c) which is arranged facing away from the first film (14a) relative to the fabric layer (14b), and is configured to cover the fabric layer (14b) towards the outside.

5. Belt (1) according to Claim 4, **characterized in that**
the second film (14c) comprises polyurethane, preferably consists of polyurethane.

6. Belt (1) according to Claim 4, **characterized in that**
the second film (14c) comprises polyethylene, preferably consists of polyethylene.

7. Belt (1) according to any of Claims 4 to 6, **characterized in that**
the second film (14c) is arranged directly adjacent to the fabric layer (14b).

8. Belt (1) according to any of the preceding claims, **characterized in that**
the drive side (11) of the belt (1) has a profiling (15), preferably teeth (15) oriented in the transverse direction.

## Revendications

1. Courroie (1) comprenant
un corps de courroie (10) qui s'étend sensiblement dans une direction longitudinale et qui comporte sensiblement un matériau flexible,
au moins un élément de traction (13), de préférence une pluralité d'éléments de traction (13), étant au moins sensiblement noyés dans le corps de courroie (10) dans la direction longitudinale et au moins sensiblement entourés par le matériau flexible du corps de courroie (10), et
un revêtement (14) qui est disposé sur le corps de courroie (10) directement à partir d'un côté d'entraînement (11) de la courroie (1),
le revêtement (14) comportant une couche de tissu (14b) et
le revêtement (14) comportant, du côté dirigé vers le corps de courroie (10), un premier film (14a) qui est disposé entre le corps de courroie (10) et la couche de tissu (14b) et qui est conçu pour séparer le corps de courroie de la couche de tissu (14b),
**caractérisé en ce que**
le matériau flexible du corps de courroie (10) comporte du polyuréthane, de préférence est en polyuréthane,
le matériau du premier film (14a) comporte du polyuréthane, de préférence est en du polyuréthane, et
le matériau flexible du corps de courroie (10) et le matériau du premier film (14a) comportent le même polyuréthane, de préférence sont en le même polyuréthane.

2. Courroie (1) selon la revendication 1, **caractérisée en ce que**
le matériau de la couche de tissu (14b) comporte du polyamide, de préférence est en polyamide.

3. Courroie (1) selon la revendication 1 ou 2, **caractérisée en ce que**
le premier film (14a) est disposé de manière immédiatement adjacente à la couche de tissu (14b).

4. Courroie (1) selon l'une des revendications précédentes, **caractérisée en ce que**
le revêtement (14) comporte en outre un deuxième film (14c) qui est disposé à l'opposé de la couche de tissu (14b) du premier film (14a) et qui est conçu pour recouvrir la couche de tissu (14b) vers l'extérieur.

5. Courroie (1) selon la revendication 4, **caractérisée en ce que**
le deuxième film (14c) comporte du polyuréthane, de préférence est en polyuréthane.

6. Courroie (1) selon la revendication 4, **caractérisée en ce que**
le deuxième film (14c) comporte du polyéthylène, de préférence est en polyéthylène.

7. Courroie (1) selon l'une des revendications 4 à 6, **caractérisée en ce que**
le deuxième film (14c) est disposé de manière immédiatement adjacente à la couche de tissu (14b).

8. Courroie (1) selon l'une des revendications précédentes, **caractérisée en ce que**
le côté d'entraînement (11) de la courroie (1) présente un profilage (15), de préférence des dents (15) orientées dans la direction transversale.
